# FASCICULE DE BREVET EUROPEEN

(11) **EP 1 965 542 B1**
(45) Date de publication et mention de la délivrance du brevet: **15.09.2010**
(21) Numéro de dépôt: 08004061.1
(22) Date de dépôt: 03.03.2008
(51) Int. Cl.: H04L 12/24, H04W 88/18

(54) **Station centrale à gestion simplifiée d'allocation de ressources, pour un réseau de communication radio utilisant un réseau de transport**
Zentrale Kontrollstation mit vereinfachter Steuerung der Ressourcenzuordnung für ein Funkkommunikationsnetz, das sich eines Transportnetzes bedient
Central station with simplified resource allocation management for a radio communication network using a transport network

(30) Priorité: 01.03.2007 FR 0753577
(43) Date de publication de la demande: 03.09.2008
(73) Titulaire: Alcatel Lucent, 75008 Paris (FR)
(72) Inventeur: Farineau, Jean M., 92300 Levallois Perret (FR); Poletti, Claude M., 92260 Fontenay-aux-Roses (FR); Aime, Christelle, 78380 Bougival (FR)
(74) Mandataire: Hedarchet, Stéphane

(56) Documents cités:
- EP-A- 1 478 195
- EP-A- 1 545 140
- WO-A-03/019834
- US-B1- 6 381 250

## Description

L'invention concerne les réseaux de communication radio, et plus particulièrement la gestion des ressources de réseaux de transport qui assurent l'interconnexion entre une station centrale et des stations de transmission distantes appartenant à de tels réseaux radio.

On entend ici par « réseau de communication radio » un réseau radio dans lequel les trafics échangés par des terminaux de communication connectés à un réseau de communication radio doivent être transmis à un commutateur d'appels chargé de gérer des communications établies dans un secteur géographique donné, via un réseau de transport connecté à au moins un site central (ou « hub ») et au moins deux sites distants de ce réseau de communication radio.

Par ailleurs, on entend ici par « réseau de transport » un réseau exclusivement dédié au transport de données entre un site central et des sites distants d'un réseau de communication radio. Il pourra donc s'agir d'un réseau satellitaire constitué d'au moins un satellite de communications et de deux équipements de transmission satellitaire ou passerelles (ou « gateway ») et/ou d'un réseau radio terrestre.

Par exemple dans un réseau radio de type GSM/GPRS ou UMTS, les stations distantes, la station centrale et les deux équipements de transmission peuvent être installés soit au niveau de l'interface dite « A-bis » du réseau, c'est-à-dire entre certaines de ses stations de base et son contrôleur de stations de base associé, soit sur l'interface dite « A-ter », c'est-à-dire entre son contrôleur de stations de base et un transcodeur couplé au commutateur d'appels associé (ou MSC pour « Mobile-services Switching Centre ») et chargé de convertir la voix compressée en paroles numérisées à 64 kbps (kilo bits par seconde), soit encore sur l'interface dite « A », c'est-à-dire entre ledit transcodeur et ledit commutateur d'appels.

L'invention concerne donc les réseaux radio (ou sans fil ou mobiles ou encore cellulaires), avec ou sans déport(s) satellitaire, y compris les réseaux dits de nouvelle génération ou NGN (« Next Generation Network » - réseaux à commutation de paquets).

Lorsque l'on conçoit un réseau radio du type précité, on peut être confronté à l'une au moins des questions suivantes :
- comment mutualiser les ressources de transmission dans un réseau de transport (éventuellement par satellite) utilisé comme « déport » d'un réseau cellulaire (par exemple GSM/GPRS ou UMTS) ?
- comment allouer dynamiquement des ressources en tenant compte du délai de réaction du dispositif de gestion des ressources du réseau de transport ?
- comment détecter les nouveaux appels sans avoir à interpréter la signalisation qui les accompagne ?
- comment éviter les détériorations des appels en cours en présence d'une saturation induite par des requêtes d'allocation de ressources trop nombreuses ?
- comment éviter la dégradation des appels en cours lorsque toutes les ressources de transmission disponibles ont été allouées ?
- comment rejeter les appels en surnombre proprement (c'est-à-dire sans perte de qualité pour les appels en cours et avec un comportement tout à fait acceptable pour un nouvel appelant), lorsque toutes les ressources de transmission disponibles ont été allouées ?
- comment tirer le meilleur parti du taux de silence sur chaque lien établi via le réseau de transport ?
- comment ne pas perturber les transferts intercellulaires (ou « handovers ») ?
- comment partager les ressources entre différentes applications et gérer proprement les taux de partage de ressources du réseau de transport entre ces différentes applications, lorsque le réseau radio est en service ?

Comme le sait l'homme de l'art, les solutions connues qui permettent de répondre à certaines des questions précitées reposent généralement sur l'interprétation de la signalisation et sur le fonctionnement coordonné des stations distantes et de la station centrale en fonction de cette interprétation de la signalisation (c'est notamment le cas dans les réseaux maillés).

Plus précisément, chaque fois qu'une station distante effectue une demande d'établissement d'appel, la signalisation correspondante doit être interprétée par la station centrale. Si le réseau radio décide d'allouer un canal, alors un canal supplémentaire est alloué par la station centrale sur le lien du réseau de transport (éventuellement par satellite). Si les ressources du réseau de transport (éventuellement par satellite) sont toutes allouées, la réponse effectuée par le contrôleur de station de base (ou BSC) lors de l'établissement d'appel est modifiée par la station centrale afin de signaler au commutateur d'appels (ou MSC (pour « Mobile-services Switching Centre »)) que l'on ne peut plus allouer de ressources. Cela nécessite donc non seulement l'interprétation de toute la signalisation d'établissement d'appel et de relâchement d'appel, mais également l'interception des réponses effectuées par le contrôleur de station de base (ou BSC) afin de les remplacer, ce qui s'avère lourd, complexe et coûteux. En outre, cela casse le modèle standardisé des réseaux cellulaires GSM/GPRS ou UMTS et rend complexe la maintenance du réseau radio du fait de l'hétérogénéité des équipements qui sont impliqués dans le fonctionnement global du réseau radio.

Par ailleurs, lorsque l'allocation de ressources se fait selon le mode DAMA (pour « Demand Assignment Multiple Access » - allocation dynamique), les demandes d'allocation de ressources sont émises par les sites distants. Or, en cas de saturation des demandes (par exemple pendant les heures de pointe), deux effets néfastes peuvent survenir :
- les données de trafic peuvent être de plus en plus retardées, ce qui est notable à l'écoute et donc inacceptable dans le cas d'une application en temps réel de type appel voix pour laquelle le retard (qui s'ajoute déjà à celui introduit par le réseau de transport) devient rapidement inconfortable,
- la multiplication des trames TRAU des appels à établir (une toutes les 20 ms par appel de type voix) en entrée de la mémoire tampon (ou « buffer ») d'un site distant retarde les trames TRAU des appels déjà en cours, ce qui entraîne une saturation rapide du buffer, puis la perte de trames par débordement du buffer, et donc une dégradation de la qualité des transmissions (trous dans la voix, effets de clips) puis une perte d'appel qui conduit la personne qui a perdu son appel à renouveler ce dernier, accroissant ainsi encore plus la saturation (effet « boule de neige »).

Le document EP 1 478 195 A1 décrit un procédé de gestion des ressources de transmission d'un réseau de communication de type point à multipoint ou multipoint à multipoint, par deux niveaux d'allocation.

Le document US 6 381 250 B1 décrit le fonctionnement d'une station centrale permettant de répartir des ressources de transmission entre plusieurs entités de transmission/réception d'un réseau.

Aucune solution connue n'apportant une entière satisfaction, l'invention a donc pour but d'améliorer la situation, tout en apportant des réponses techniques à certaines au moins des questions précitées.

Elle propose à cet effet une station (ou site) central(e), destiné(e) à faire partie d'un réseau de communication radio comprenant en outre au moins deux stations (ou sites) distant(e)s, connecté(e) à ces dernières via un réseau de transport et comprenant au moins deux compresseurs/décompresseurs de données chargés de compresser des données transmises dans des canaux de transmission choisis du réseau radio et des moyens d'allocation chargés d'allouer cycliquement aux sites distants des ressources du réseau de transport (correspondant à des capacités de transmission).

On fait ici la différence entre un canal de transmission qui est situé en amont de la fonction de compression d'un compresseur/ décompresseur et qui est porté par une trame E1, et la capacité de transmission qui est généralement non granulaire et qui est utilisée pour le transport (par exemple par satellite) entre deux compresseurs/décompresseurs.

Cette station centrale se caractérise par le fait que :
- chacun de ses compresseurs/décompresseurs est chargé de délivrer cycliquement des premières informations représentatives des ressources du réseau de transport qui sont requises pour les canaux de transmission dont il a la charge, et
- ses moyens d'allocation sont chargés de déterminer cycliquement la répartition de la capacité globale de transmission disponible au niveau du réseau de transport entre les différents compresseurs/décompresseurs, pour le cycle en cours, en fonction des premières informations, et de transmettre à chaque compresseur/décompresseur, pour sa partie compression, des secondes informations représentatives de la capacité de transmission qui lui est allouée pour le prochain cycle en fonction de cette répartition déterminée.

La station centrale selon l'invention peut comporter d'autres caractéristiques qui peuvent être prises séparément ou en combinaison, et notamment :
- ses moyens d'allocation peuvent être chargés de répartir les ressources de transmission disponibles du réseau de transport entre les compresseurs/ décompresseurs au prorata des ressources qui sont requises pour les canaux de transmission dont ils ont respectivement la charge et qui sont définies dans les premières informations qu'ils délivrent ;
- en variante ou en complément, ses moyens d'allocation peuvent être chargés d'allouer aux compresseurs/décompresseurs soit les ressources qu'ils ont requises pour les canaux de transmission dont ils ont respectivement la charge lorsque les ressources de transmission disponibles du réseau de transport sont supérieures ou égales à la somme des ressources qu'ils ont requises, soit les ressources qui leur avaient été allouées pour le cycle précédent augmentées du prorata de la différence entre la somme des ressources de transmission disponibles du réseau de transport et la somme des ressources qu'ils ont requises pour les canaux de transmission dont ils ont respectivement la charge ;
- chacun de ses compresseurs/décompresseurs peut être chargé de délivrer cycliquement des premières informations qui sont représentatives du nombre d'appels établis et du taux de parole ;
- en variante, chacun de ses compresseurs/décompresseurs peut être chargé de délivrer cycliquement des premières informations représentatives de la variation du nombre d'appels établis et de la variation du taux de parole par rapport au cycle précédent ;
- ses compresseurs/décompresseurs et ses moyens d'allocation peuvent être agencés de manière à collaborer ensemble pour l'allocation de ressources sur la voie montante (des stations distantes vers la station centrale), et/ou sur la voie descendante (de la station centrale vers les stations distantes) ;
- chacun de ses compresseurs/décompresseurs peut être chargé de délivrer cycliquement des premières informations représentatives des ressources du réseau de transport qui sont requises pour les canaux de transmission dont il a la charge, compte tenu d'une marge ;
- ses moyens d'allocation peuvent être chargés d'adjoindre une marge choisie aux ressources du réseau de transport qui sont requises par chaque compresseur/décompresseur pour les canaux de transmission dont il a la charge ;
- la marge peut être constante ou égale à une proportion choisie des ressources du réseau de transport qui sont requises pour les canaux de transmission dont le compresseur/décompresseur considéré a la charge ;
- ses moyens d'allocation, dans un exemple ne faisant pas partie de l'invention, peuvent comprendre, d'une part, un contrôleur d'allocation de ressources chargé de délivrer cycliquement les premières informations représentatives des ressources disponibles du réseau de transport, et d'autre part, un contrôleur de trafic chargé de déterminer cycliquement l'allocation des ressources du réseau de transport en fonction des premières informations ;
   ➢ le contrôleur d'allocation de ressources peut être chargé de corriger l'allocation de ressources qui a été déterminée par le contrôleur de trafic en fonction de contraintes de transmission radio, et de transmettre la définition des ressources allouées corrigées aux stations distantes et au contrôleur de trafic. Dans ce cas, le contrôleur de trafic peut fournir cycliquement aux compresseurs/décompresseurs les instructions qui définissent les capacités de transmission (correspondant à des nombres de canaux de transmission du réseau radio) qu'ils sont respectivement autorisés à utiliser pour le prochain cycle compte tenu des ressources allouées corrigées ;
   ➢ le contrôleur d'allocation de ressources peut par exemple être de type DAMA;
- chacun de ses compresseurs/décompresseurs peut être chargé de bloquer les trames de données qui sont transmises sur des canaux nouvellement actifs lorsque la capacité de transmission, nécessaire pour les canaux de transmission desquels il reçoit des données pour une voie donnée (montante ou descendante), dépasse la capacité de transmission qui lui a été alloué pour le cycle en cours et pour cette voie donnée ;
- chacun de ses compresseurs/décompresseurs peut être chargé de bloquer les trames de données qui sont transmises sur des canaux nouvellement actifs lorsque la capacité de transmission qu'il est autorisé à utiliser pour le prochain cycle est inférieure ou égale à la capacité de transmission qu'il a été autorisé à utiliser pour le cycle en cours ;
- ses moyens d'allocation peuvent être chargés, en cas de détection d'un risque de congestion au niveau du réseau de transport, d'adresser à l'un au moins des compresseurs/décompresseurs un indicateur binaire requérant le rejet de tout nouvel appel.

L'invention est particulièrement bien adaptée, bien que de façon non exclusive, aux réseaux de communication radio (ou sans fil) à déport satellitaire. Mais, elle est également adaptée aux réseaux radio terrestres, par exemple de type WLAN, WiMAX ou WiFi.

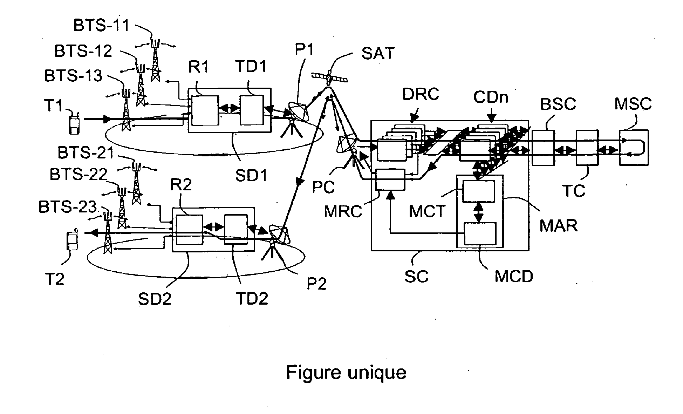

D'autres caractéristiques et avantages de l'invention apparaîtront à l'examen de la description détaillée ci-après, et du dessin annexé, sur lequel l'unique figure illustre de façon très schématique une partie d'une installation de communication selon l'invention. Le dessin annexé pourra non seulement servir à compléter l'invention, mais aussi contribuer à sa définition, le cas échéant.

L'invention a pour objet de permettre une gestion simplifiée de l'allocation des ressources de transmission d'un réseau de transport assurant l'interconnexion entre des stations distantes et une station centrale (ou hub) d'un réseau de communication radio.

Dans ce qui suit, on considère à titre d'exemple non limitatif que le réseau de communication radio est un réseau de téléphonie cellulaire (ou mobile), par exemple de type GSM/GPRS, à déport satellitaire. Mais, l'invention n'est pas limitée à ce type de réseau de communication radio. Elle concerne en effet tous les réseaux radio terrestres, et notamment ceux de type EDGE, UMTS, WLAN, WiMAX et Wi-Fi, et d'une manière générale les réseaux de communication radio terrestres tels que ceux de type TDMA, FDMA ou CDMA (qui sont adaptés à un fonctionnement en mode maillé), y compris les réseaux dits de nouvelle génération ou NGN (pour « Next Generation Network »). Elle concerne également les réseaux de communication par satellite.

Par ailleurs, le réseau de transport qui assure l'interconnexion entre les stations distantes et la station centrale du réseau (de communication) radio n'est pas forcément constitué par un déport satellitaire. Tout type de réseau de transport peut être envisagé, qu'il soit terrestre ou satellitaire, et notamment celui de type LMDS, et d'une manière générale tous ceux de type point à multipoints radio (disposant de préférence d'antennes peu directives).

Comme cela illustré sur l'unique figure, une installation de communication constituée d'un réseau GSM/GPRS à déport satellitaire comprend schématiquement, mais de façon suffisante à la compréhension de l'invention : des stations de base (ou BTSs pour « Base Transceiver Stations ») BTS-ij, un ou plusieurs contrôleurs de stations de base BSC (pour « Base Station Controller »), au moins un commutateur d'appels central MSC (pour « Mobile-services Switching Centre »), des stations (ou sites) distant(e)s SDi et une station (ou site) central(e) (ou hub) SC.

Les stations de base BTS-ij (ici j = 1 à 3) comportent des équipements radio qui réalisent la liaison avec des terminaux de communication mobiles Tk.

On entend ici par « terminal de communication mobile » Tk tout équipement de communication mobile capable d'échanger des données sous la forme de signaux radio avec une station de base BTS-ij. Il pourra donc s'agir, par exemple, d'équipements d'utilisateurs, tels que des téléphones mobiles (ou cellulaires) ou des ordinateurs portables ou des assistants personnels numériques (ou PDA) munis d'un équipement de communication radio. Mais, l'invention concerne également les communications entre terminaux (ou stations) fixes communiquant via des réseaux de communication mobile. La notion de mobilité est ici nullement limitative, elle est seulement destinée à illustrer un exemple d'application de l'invention à un réseau radio de type cellulaire.

On considère dans ce qui suit que les terminaux de communication mobiles sont des téléphones mobiles Tk (ici k = 1 ou 2).

Chaque contrôleur de stations de base BSC est connecté à une ou plusieurs stations de base BTS-ij (via le réseau de transport) et est chargé d'assurer la gestion d'une partie au moins des ressources radio de son réseau radio.

Le réseau de transport comprend ici au moins un lien satellite (ou déport satellitaire) comportant un satellite de communications SAT, et des équipements de communication satellitaire Pi et PC se présentant généralement sous la forme d'une passerelle (ou « gateway ») et chargés de transmettre et recevoir du trafic et de la signalisation via le satellite SAT.

Dans l'exemple illustré, le lien satellite est implanté au niveau de l'interface A-bis du réseau, c'est-à-dire entre les stations de base BTS-ij et le contrôleur de stations de base BSC (couplé au commutateur d'appels central MSC via le transcodeur TC). Mais, le lien satellite peut être implanté au niveau de l'interface A-ter du réseau, c'est-à-dire entre un contrôleur de stations de base BSC et un transcodeur TC. Dans ce cas, les routeurs de trafic sont raccordés au contrôleur de stations de base BSC. Le lien satellite peut être également implanté au niveau de l'interface A, c'est-à-dire entre le transcodeur TC et le commutateur d'appels central MSC. Toutes ces interfaces sont définies par les normes G.703 pour ce qui concerne la couche physique et G.704 pour ce qui concerne le tramage (généralement à 2048 kbps),

Le commutateur d'appels central MSC est chargé de gérer les communications établies dans le secteur géographique couvert par les stations de base BTS-ij couplées au(x) contrôleur(s) de stations de base BSC au(x)quel(s) il est couplé, via le satellite SAT. Il est raccordé à un coeur du réseau (par exemple de type PLMN (pour « Public Land Mobile Network»)) ainsi que de préférence (et comme illustré) à un transcodeur TC chargé de convertir la voix compressée en paroles numérisées à 64 kbps (kilo bits par seconde) et réciproquement.

Chaque station distante SDi (ici i = 1 ou 2) assure le routage des trafics qu'elle reçoit en fonction de leur(s) destination(s) et comprend au moins un équipement de compression/décompression Ri couplé à un groupe de stations de base BTS-ij et à un terminal de traitement TDi, par exemple de type DVB-RCS, couplé à un équipement de communication satellitaire Pi. Chaque équipement de compression/décompression Ri est chargé d'assurer la compression/décompression de couche deux des données pour la transmission mixte synchrone/asynchrone de trames de données. Les données utiles (ou « payload ») de chaque trame TRAU sont extraites et transmises avec une représentation compactée de l'entête de signalisation de la trame TRAU. Les trames TRAU qui ne sont pas de parole ou de données utiles (comme par exemple les trames non valides, les trames SID et les trames de bourrage) sont transmises simplement sous la forme compactée de leur entête de signalisation, avec en plus dans le cas des trames SID des informations caractérisant le bruit de confort (partie limitée de la payload)). En sortie du module dédié à la compression (sur la voie montante) on a un flux de débit variable (IP, ATM, Frame Relay (FR), etc) qui est fonction du nombre d'appels en cours et du taux de silence (ou de parole).

La station centrale SC comprend au moins des démodulateurs centraux DRC, un modulateur central MRC, au moins deux équipements de compression/décompression CDn et des moyens d'allocation MAR.

Les démodulateurs centraux DRC sont connectés à l'équipement de communication satellitaire PC afin de recevoir les trames montantes qui se dirigent vers le commutateur d'appels MSC.

Le modulateur central MRC est connecté à l'équipement de communication satellitaire PC afin de lui transmettre les trames descendantes qui se dirigent vers les stations de base BTS-ij et qui proviennent du commutateur d'appels MSC.

Les équipements de compression/décompression CDn (qui seront décrits en détail plus loin) sont couplés aux démodulateurs centraux DRC, au modulateur central MRC et (ici) au contrôleur de stations de base BSC. Ils sont chargés de la compression/décompression de couche deux des données pour la transmission mixte synchrone/asynchrone des trames de données (par conséquent ils restituent le contenu et le format d'origine des trames reçues sous forme compactée). Chaque équipement de compression/décompression CDn comprend, d'une part, un module de décompression muni d'entrées et de sorties associées respectivement à des canaux de transmission de la voie montante (correspondant à des capacités de transmission connues), et d'autre part, un module de compression muni d'entrées et de sorties associées respectivement à des canaux de transmission de la voie descendante (correspondant à des capacités de transmission connues). En sortie d'un module de compression (sur la voie descendante) on a un flux de débit variable (IP, ATM, Frame Relay (FR), etc) qui est fonction du nombre d'appels en cours et du taux de silence (ou de parole).

Les moyens d'allocation de ressources MAR sont chargés d'allouer cycliquement aux sites distants SDi des ressources du réseau de transport qui correspondent à des capacités de transmission. Ils sont par exemple constitués d'un contrôleur de trafic MCT connecté aux équipements de compression/décompression CDn et d'un contrôleur d'allocation de ressources MCD, par exemple de type DAMA, connecté au contrôleur de trafic MCT et au modulateur central MRC.

Dans ce qui suit, on considère que les communications (ou appels) se font selon le mode dit TFO (pour « Tandem Free Operation »). Il est rappelé qu'un appel entre terminaux mobiles en mode TFO se caractérise par une absence de transcodage afin de garantir une meilleure qualité d'écoute du fait de l'absence de ré-encodage du flux de parole. De ce fait, les trames TRAU sont traitées par le transcodeur TC en mode transparent, véhiculées par le commutateur d'appels MSC en mode transparent, et ré-encodées par le transcodeur en mode transparent. Mais, l'invention concerne également les communications qui ne se font pas en mode TFO.

Dans un réseau radio du type de celui décrit et illustré, les données sont échangées sur l'interface A-bis au moyen de canaux de signalisation multiples (au moins un canal par station de base BTS), occupant chacun soit un octet par trame E1 (dans le cas de canaux de signalisation à 64 kbps), soit quatre bits par trame (dans le cas de canaux à 32 kbps), soit encore deux bits par trame (dans le cas de canaux à 16 kbps).

Lorsque les données échangées sont des données de trafic, les canaux utilisés sont des canaux de trafic TCH (pour « Traffic Channels »). Chaque canal TCH occupe alors soit deux bits par trame (dans le cas d'un canal de type « Full Rate » (ou FR), ou EFR ou encore AMR, à 16 kbps), soit un bit par trame (dans le cas d'un canal de type « Half Rate » (ou HR) à 8 kbps). Dans le cas d'une communication vocale on utilise un canal TCH dans chaque sens, de taille et de position identiques au sein de chaque trame dite E1 entrante ou sortante sur un port physique donné.

Dans un réseau à déport satellitaire classique, c'est-à-dire dans lequel l'invention peut être mise en oeuvre, l'établissement d'une communication (ou d'un appel) entre un premier téléphone mobile T1, dit appelant, et un second téléphone mobile T2, dit appelé, requiert une succession d'étapes dont les principales sont rappelées ci-après.

L'utilisateur du premier téléphone mobile T1 compose le numéro du second téléphone mobile T2. Un échange de messages de signalisation se fait alors entre le premier téléphone mobile T1 et le commutateur d'appels central MSC afin de caractériser l'appel, et notamment le numéro de l'appelé T2. Le commutateur d'appels MSC utilise ensuite sa base de données d'abonnés afin de déterminer la localisation de l'appelé T2. On considère ici, comme illustré, que l'appelé T2 est un abonné du réseau situé dans le secteur géographique géré par le commutateur d'appels MSC.

Un échange de messages de signalisation se fait alors entre le commutateur d'appels MSC et le second téléphone mobile T2 afin de déclencher la sonnerie de ce dernier. On établit des premiers canaux de trafic montant et descendant entre le premier téléphone mobile T1 et le commutateur d'appel central MSC, puis des seconds canaux de trafic montant et descendant entre le second téléphone mobile T2 et le commutateur d'appel central MSC, ce qui constitue au total quatre circuits (deux montants et deux descendants). Ces circuits sont matérialisés sur l'unique figure par des traits continus épais.

Si l'utilisateur du second téléphone mobile T2 décroche, la procédure d'établissement d'appel est conclue et les quatre circuits sont utilisés pendant toute la durée de la communication afin de véhiculer la voix compressée. Dès que l'un des deux utilisateurs raccroche, les quatre circuits sont libérés.

Chacun des quatre circuits utilise une capacité de 16 kbps ou 8 kbps selon le type de codage de la voix utilisé. Par conséquent, un appel local entre deux téléphones mobiles utilise une capacité de 32 ou 64 kbps sur le lien satellite Pi, SAT, PC.

Pour que les messages de signalisation puissent être échangés et pour que les circuits puissent être établis, il faut que le réseau radio ait préalablement alloué des ressources de transmission du réseau de transport (ici le lien satellite) aux sites distants concernés (ici SD1 et SD2) et aux compresseurs/décompresseurs CDn de la station centrale SC. La gestion de cette allocation est l'objet de l'invention.

L'allocation de ressources est gérée par les moyens d'allocation MAR de la station centrale SC. Il est important de noter que dans l'exemple non limitatif illustré les moyens d'allocation MAR sont constitués d'un contrôleur de trafic MCT et d'un contrôleur d'allocation de ressources MCD, par exemple de type DAMA. Mais, les fonctionnalités de ces deux contrôleurs pourraient être assurées par un unique contrôleur.

L'invention propose de modifier les fonctionnements respectifs des équipements de compression/décompression CDn et des moyens d'allocation MAR par rapport à leurs fonctionnements classiques bien connus de l'homme de l'art.

Selon l'invention chaque équipement de compression/décompression CDn (ci-après appelé compresseur/décompresseur) de la station centrale SC délivre cycliquement des premières informations qui sont représentatives des ressources du réseau de transport qui sont requises pour les canaux de transmission dont il a la charge.

Ces premières informations peuvent être représentatives du nombre d'appels établis au moyen de canaux de transmission qui passent par un compresseur/décompresseur CDn et du taux de parole sur ces canaux de transmission utilisés, ainsi qu'éventuellement du nombre d'appels en cours d'établissement au moyen de canaux de transmission qui passent par un compresseur/décompresseur CDn. Dans une variante, les premières informations peuvent être représentatives de la variation par rapport au cycle précédent du nombre d'appels établis au moyen de canaux de transmission qui passent par un compresseur/décompresseur CDn et de la variation par rapport au cycle précédent du taux de parole sur ces canaux de transmission utilisés.

Il est rappelé qu'un compresseur/décompresseur CDn détecte un nouvel appel en cas de présence de trames TRAU sur un ou plusieurs canaux de transmission transportés par les trames E1 reçues.

Par exemple, les premières informations sont délivrées en kilobits par seconde (kbps).

Toujours selon l'invention, les moyens d'allocation MAR ont au moins deux fonctions principales.

La première fonction consiste à déterminer cycliquement la capacité globale de transmission qui est disponible au niveau du réseau de transport pour le cycle en cours.

On notera que la capacité disponible, qu'il ne faut pas confondre avec la capacité non utilisée, peut être considérée soit comme constante, soit comme variable en fonction des conditions de transmission ainsi que des éventuels effets d'évanouissement (ou « fading ») induits.

Cette première fonction est préférentiellement assurée par le contrôleur d'allocation de ressources MCD.

La seconde fonction consiste tout d'abord à déterminer cycliquement la répartition entre les différents compresseurs/décompresseurs CDn de la capacité globale de transmission (qui est disponible au niveau du réseau de transport pour le cycle en cours), en fonction des premières informations, puis à transmettre à chaque compresseur/décompresseur CDn, pour sa partie compression, des secondes informations représentatives de la capacité qui lui est allouée pour le prochain cycle en fonction de cette répartition effectuée, afin de définir une allocation des ressources du réseau de transport.

On notera que les moyens d'allocation MAR fournissent à chaque site distant SDi concerné, au site central SC et à chaque compresseur/décompresseur CDn la définition de la capacité de transmission qui lui est allouée pour le prochain cycle (éventuellement sous la forme d'une partie au moins d'une table d'allocation).

Cette seconde fonction est préférentiellement assurée par le contrôleur de trafic MCT.

On notera qu'il est préférable que cette allocation de ressources prenne en compte une marge de capacité destinée à anticiper l'évolution du taux de parole et/ou l'occurrence de transferts intercellulaires (ou handovers). Cette marge de capacité peut être soit prise en compte initialement par chaque compresseur/décompresseur CDn et donc intégrée dans les premières informations qu'il délivre, soit adjointe par les moyens d'allocation MAR. Dans le premier cas, la marge de capacité est établie par chaque compresseur/ décompresseur CDn par calcul ou tabulation. Dans le second cas, la marge de capacité est calculée par les moyens d'allocation MAR à partir des premières informations reçues des compresseurs/décompresseurs CDn.

Une marge de capacité de transmission peut être soit constante, soit égale à une proportion choisie des ressources du réseau de transport qui sont requises pour les canaux de transmission utilisés dont le compresseur/ décompresseur CDn considéré a la charge. Par exemple, une marge de 5 à 10% peut être utilisée.

L'allocation peut se faire d'au moins trois façons. Dans les trois cas, elle se fait après avoir effectuée la somme des capacités requises par chaque compresseur/décompresseur CDn (et représentées par les premières informations), puis après avoir comparé cette somme à la capacité globale de transmission disponible. Comme indiqué ci-avant, ces capacités requises sommées tiennent éventuellement compte de marges de capacité.

La première façon consiste à répartir les ressources de transmission disponibles du réseau de transport entre les différents compresseurs/ décompresseurs CDn au prorata des ressources qu'ils ont requises pour les canaux de transmission dont ils ont respectivement la charge (et qui sont représentées par les premières informations qu'ils délivrent). Cela permet de partager en permanence la totalité des ressources (ou capacité) de transmission disponible(s) du réseau de transport, même si chaque lien n'utilise qu'une partie des ressources qui lui ont été allouées. Un lien est ici associé à un compresseur/décompresseur CDn.

La deuxième façon consiste à allouer aux différents compresseurs/ décompresseurs CDn des ressources qui dépendent du résultat de la comparaison entre les ressources de transmission disponibles du réseau de transport et la somme des ressources qu'ils ont requises. Plus précisément, si la somme des ressources (capacités) qu'ils ont requises pour les canaux de transmission dont ils ont respectivement la charge est inférieure aux ressources de transmission disponibles du réseau de transport, les moyens d'allocations MAR allouent à chaque compresseur/décompresseur CDn les ressources (capacités) qu'il a requises pour les canaux de transmission dont il a la charge. Dans le cas contraire, les moyens d'allocations MAR allouent à chaque compresseur/décompresseur CDn les ressources (capacités) qui lui avaient été allouées pour le cycle précédent augmentées du prorata de la différence entre les ressources de transmission disponibles du réseau de transport et la somme des ressources qu'il a requises pour les canaux de transmission dont il a la charge. Cela permet de n'allouer que ce qui est strictement nécessaire et donc de pouvoir exploiter le reliquat de capacité non utilisé pour d'autres applications (hors des heures de pointe), comme par exemple pour des applications de transmission de données et non de voix. Dans ce cas, il est préférable de prévoir un peu plus de marge de capacité pour chaque compresseur/ décompresseur CDn.

La troisième façon consiste à effectuer une allocation de ressources reposant sur un panachage des première et deuxième façons.

On notera que les compresseurs/décompresseurs CDn et les moyens d'allocation MAR peuvent collaborer ensemble en vue de l'allocation de ressources sur la voie montante et/ou sur la voie descendante.

L'allocation de ressources se présente généralement sous la forme d'une table d'allocation. Cette dernière peut éventuellement faire l'objet d'une validation (ou d'un contrôle) avant d'être transmise (partiellement ou de façon intégrale) aux équipements concernés (notamment SC, SDi, CDn).

Cette validation se fait en fonction de paramètres choisis comme par exemple les contraintes de transmission radio en cours. En effet, un lien peut par exemple devoir utiliser à un instant donné plus de ressources à débit identique si la puissance radio est supérieure, par exemple en raison d'affaiblissements localisés en raison de fortes précipitations et/ou d'interférences localisées. Si besoin est, la table d'allocation peut donc être corrigée en fonction des contraintes de transmission radio en cours.

Lorsque les moyens d'allocation MAR comprennent un contrôleur de trafic MCT et un contrôleur d'allocation de ressources de type DAMA MCD, le premier détermine préférentiellement la table d'allocation, tandis que le dernier procède aux éventuelles corrections (validation). Dans ce cas, le contrôleur DAMA MCD transmet la table d'allocation corrigée aux sites distants SDi (et plus précisément à leurs terminaux de traitement TDi respectifs), afin qu'ils appliquent l'allocation de ressources établie (intervalles temporels en TDMA, fréquences allouées en FDMA, ou codes alloués en CDMA), ainsi qu'au contrôleur de trafic MCT (au moins la capacité allouée corrigée par lien, par exemple en kbps), afin qu'il la communique à chaque compresseur/ décompresseur CDn pour qu'il augmente ou diminue en conséquence sa capacité de transmission courante au cycle suivant.

Le compresseur/décompresseur CDn qui a reçu une allocation de capacité conforme à sa demande transmet les trames reçues sur son entrée, sans exclusion, à concurrence de la capacité allouée. En cas de dépassement provoqué par l'établissement d'un ou plusieurs nouveaux appels (sur la voie montante ou descendante), une ou plusieurs trames de parole peuvent être converties en trames de silence ou de bourrage sur le nombre de canaux nécessaires à la résorption de la congestion (généralement un canal suffit). Puis, si le compresseur/décompresseur CDn ne reçoit pas pour le cycle suivant la capacité supplémentaire demandée pour supporter le ou les nouveaux appels, ce(s) demier(s) est (sont) rejeté(s).

On notera que le rejet des trames sur la voie descendante suffit à provoquer le rejet d'appel. Le rejet des trames sur la voie montante n'est pas indispensable.

Il est important de noter que la phase de validation (ou correction) peut être facultative. En d'autres termes, le contrôleur de trafic MCT peut décider souverainement des allocations de ressources, le contrôleur DAMA MCD étant alors esclave du contrôleur de trafic MCT.

Par ailleurs, on peut envisager que les moyens d'allocation MAR fournissent aux compresseurs/décompresseurs CDn les capacités (éventuellement corrigées) qui leurs ont été respectivement allouées, accompagnées d'un indicateur binaire (ou « bit stop »), dont le rôle est de prévenir tout effet de congestion lorsque la somme des capacités allouées est quasiment égale aux capacités globales disponibles. Lorsque les moyens d'allocation MAR comprennent un contrôleur de trafic MCT et un contrôleur d'allocation de ressources de type DAMA MCD, c'est préférentiellement le premier qui décide d'adjoindre un indicateur binaire aux définitions des capacités qui sont allouées aux compresseurs/décompresseurs CDn lorsqu'il détecte un risque de congestion. Un risque de congestion est évalué en comparant la somme courante des capacités requises à la capacité disponible. On notera qu'en cas de risque de congestion, le contrôleur DAMA MCD (ou le contrôleur de trafic MCT) peut en outre décider d'allouer aux compresseurs/décompresseurs CDn les mêmes capacités que celles allouées au cycle précédent. Dans une variante, le contrôleur de trafic MCT pourrait adjoindre l'indicateur binaire et/ou décider de reconduire l'allocation de ressources du cycle précédent.

Ainsi, lorsque les compresseurs/décompresseurs CDn reçoivent l'indicateur binaire, ils en déduisent qu'ils vont devoir rejeter tout nouvel appel en cours d'établissement. Par conséquent, lors du cycle suivant, ils vont bloquer systématiquement les trames TRAU portées par tout appel en excès vis à vis des capacités qui leurs ont été respectivement allouées. Si par exemple un compresseur/décompresseur CDn a sollicité des ressources pour un premier appel supplémentaire et qu'un second appel supplémentaire apparaît au cours de ce cycle d'allocation, et si la capacité qui lui a été allouée est tout juste égale à la capacité qu'il a demandée, alors il rejette le second appel.

Cet indicateur binaire (ou bit stop) est remis à zéro (0) dès que la situation de congestion est terminée.

On notera qu'un mécanisme d'hystérésis peut être éventuellement mis en place pour la génération de l'indicateur binaire, afin d'éviter tout effet d'oscillation à la limite du basculement de l'état congestionné vers l'état non congestionné et inversement.

On notera qu'au lieu d'adjoindre un indicateur binaire aux définitions des capacités allouées pour signaler un état de congestion, on peut agencer les compresseurs/décompresseurs CDn de sorte qu'ils interprètent une allocation de capacité inférieure ou égale à celle du cycle précédent comme une interdiction d'accepter tout nouvel appel.

Il est rappelé que tout ce qui a été dit précédemment concerne l'allocation de ressources (ou capacités) sur la voie montante comme sur la voie descendante.

Dans ce qui précède on a décrit une mise en oeuvre de l'invention dans le cas d'appels de type voix. Mais, l'invention s'applique également aux appels destinés à la transmission de données (ou « data »). Dans ce cas, un échange d'information doit avoir lieu entre le compresseur/décompresseur TDi de la station distante SDi qui doit transmettre du trafic de données et le compresseur/ décompresseur CDn correspondant de la station centrale SC. Plus précisément, le compresseur/décompresseur TDi transmet au compresseur/ décompresseur CDn sa demande d'allocation de ressources, et ce dernier la communique aux moyens d'allocation MAR (par exemple à son contrôleur de trafic MCT) puis récupère l'allocation de ressources effectuée par les moyens d'allocation MAR pour la voie montante et la transmet au compresseur/décompresseur TDi distant. On met donc en oeuvre le même mécanisme que celui décrit précédemment, mais étendu aux deux voies.

Par ailleurs, dans ce qui précède on a décrit une mise en oeuvre de l'invention dans le cas d'une utilisation de l'ensemble des ressources du réseau de transport pour une seule application. Mais l'invention s'applique également lorsque les ressources du réseau de transport sont partagées entre plusieurs applications, telles que la téléphonie fixe, les réseaux de données de particuliers ou d'entreprises, la diffusion de contenus multimédia, et analogues. Dans ce cas, les ressources allouées par les moyens d'allocation MAR pour chaque application sont généralement fixées à un instant donné (on notera que le partage des ressources peut s'effectuer dynamiquement suivant des règles fixées, par exemple des capacités minimale et maximale par service, une priorité entre les différents types de services, ou un niveau de priorité différent par canal de transmission au sein de chaque groupe de service). On applique alors le schéma décrit précédemment pour chaque application. Puis, si l'opérateur du réseau radio révise la ventilation des ressources pour les différentes applications, l'allocation de ressources par les moyens d'allocation MAR est actualisée en conséquence. Si cette révision va dans le sens d'une décroissance pour une application, l'indicateur binaire (bit stop) peut le cas échéant être utilisé pour provoquer le blocage des nouveaux appels de cette application tant que la capacité requise n'est pas redescendue en dessous de la capacité globale disponible pour cette application.

Grâce à l'invention, l'éventuel contrôleur DAMA MCD n'est pas lié directement à un terminal de traitement TDi distant, puisque les demandes d'allocation de ressources proviennent de l'éventuel contrôleur de trafic MCT qui exploite les requêtes de chaque compresseur/décompresseur CDn et fournit de manière explicite une demande de capacité pour chaque lien (associé à chaque compresseur/décompresseur CDn), éventuellement de manière différenciée pour chaque voie (montante ou descendante). Les effets de type boule de neige sont donc évités, puisque dès que la somme des demandes d'allocation de ressources s'approche de la capacité disponible, deux mécanismes entrent en jeu : d'une part les ressources supplémentaires allouées sont de plus en plus faible au fur et à mesure que l'on approche du plafond de ressources, et d'autre part le mécanisme de limitation d'appel (ainsi que l'éventuel bit stop avec hystérésis) permet(tent) de bloquer implicitement tout nouvel appel tant que les capacités utilisées ne redescendent pas en dessous d'une certaine valeur (ce qui est assez rapidement obtenu au fur et à mesure de la fin normale (i.e. sur raccroché) des appels en cours).

L'invention ne se limite pas aux modes de réalisation de station centrale décrits ci-avant, seulement à titre d'exemple, mais elle englobe toutes les variantes que pourra envisager l'homme de l'art dans le cadre des revendications ci-après.

## Revendications

1. Station centrale (SC) pour un réseau de communication radio comprenant en outre au moins deux stations distantes (SDi), ladite station centrale (SC) étant connectée auxdites stations distantes (SDi) via un réseau de transport et comprenant au moins deux compresseurs/décompresseurs (CDn) agencés pour compresser des données transmises dans des canaux de transmission choisis dudit réseau radio et des moyens d'allocation (MAR) agencés pour allouer cycliquement auxdites stations distantes (SDi) des ressources dudit réseau de transport correspondant à des capacités de transmission, **caractérisée en ce que** chaque compresseur/décompresseur (CDn) est agencé pour délivrer cycliquement des premières informations représentatives des ressources du réseau de transport requises pour les canaux de transmission dont il a la charge, et **en ce que** lesdits moyens d'allocation (MAR) sont agencés pour déterminer cycliquement la répartition de la capacité globale de transmission disponible au niveau du réseau de transport entre les différents compresseurs/décompresseurs (CDn), pour le cycle en cours, en fonction desdites premières informations, et pour transmettre à chaque compresseur/décompresseur (CDn), pour sa partie compression, des secondes informations représentatives de la capacité de transmission qui lui est allouée pour le prochain cycle en fonction de cette répartition déterminée.

2. Station centrale selon la revendication 1, **caractérisée en ce que** lesdits moyens d'allocation (MAR) sont agencés pour répartir les ressources de transmission disponibles du réseau de transport entre lesdits compresseurs/ décompresseurs (CDn) au prorata des ressources requises pour les canaux de transmission dont ils ont respectivement la charge et qui sont définies dans les premières informations qu'ils délivrent.

3. Station centrale selon l'une des revendications 1 et 2, **caractérisée en ce que** lesdits moyens d'allocation (MAR) sont agencés pour allouer auxdits compresseurs/décompresseurs (CDn) soit les ressources qu'ils ont requises pour les canaux de transmission dont ils ont respectivement la charge lorsque les ressources de transmission disponibles du réseau de transport sont supérieures ou égales à la somme des ressources qu'ils ont requises, soit les ressources qui leur avaient été allouées pour le cycle précédent augmentées du prorata de la différence entre la somme des ressources de transmission disponibles du réseau de transport et la somme des ressources qu'ils ont requises pour les canaux de transmission dont ils ont respectivement la charge.

4. Station centrale selon l'une des revendications 1 à 3, **caractérisée en ce que** chaque compresseur/décompresseur (CDn) est agencé pour délivrer cycliquement des premières informations représentatives du nombre d'appels établis et du taux de parole.

5. Station centrale selon l'une des revendications 1 à 3, **caractérisée en ce que** chaque compresseur/décompresseur (CDn) est agencé pour délivrer cycliquement des premières informations représentatives de la variation du nombre d'appels établis et de la variation du taux de parole par rapport au cycle précédent.

6. Station centrale selon l'une des revendications 1 à 5, **caractérisée en ce que** lesdits compresseurs/décompresseurs (CDn) et lesdits moyens d'allocation (MAR) sont agencés pour collaborer ensemble pour l'allocation de ressources sur une voie montante, des stations distantes (SDi) vers ladite station centrale (SC), et/ou sur une voie descendante, de la station centrale (SC) vers lesdites stations distantes (SDi).

7. Station centrale selon l'une des revendications 1 à 6, **caractérisée en ce que** chaque compresseur/décompresseur (CDn) est agencé pour délivrer cycliquement des premières informations représentatives des ressources du réseau de transport requises pour les canaux de transmission dont il a la charge, compte tenu d'une marge.

8. Station centrale selon l'une des revendications 1 à 6, **caractérisée en ce que** lesdits moyens d'allocation (MAR) sont agencés pour adjoindre une marge choisie aux ressources du réseau de transport requises par chaque compresseur/décompresseur (CDn) pour les canaux de transmission dont il a la charge.

9. Station centrale selon l'une des revendications 7 et 8, **caractérisée en ce que** ladite marge est constante.

10. Station centrale selon l'une des revendications 7 et 8, **caractérisée en ce que** ladite marge est choisie égale à une proportion choisie des ressources du réseau de transport requises pour les canaux de transmission dont le compresseur/décompresseur (CDn) considéré a la charge.

11. Station centrale selon l'une des revendications 1 à 10, **caractérisée en ce que** chaque compresseur/décompresseur (CDn) est agencé pour bloquer des trames de données transmises sur des canaux nouvellement actifs lorsque la capacité de transmission, nécessaire pour les canaux de transmission desquels il reçoit des données pour une voie donnée, dépasse la capacité de transmission qui lui a été allouée pour le cycle en cours et pour cette voie donnée.

12. Station centrale selon l'une des revendications 1 à 11, **caractérisée en ce que** chaque compresseur/décompresseur (CDn) est agencé pour bloquer des trames de données transmises sur des canaux nouvellement actifs lorsque la capacité de transmission qu'il est autorisé à utiliser pour le prochain cycle est inférieure ou égale à la capacité de transmission qu'il a été autorisé à utiliser pour le cycle en cours.

13. Station centrale selon l'une des revendications 1 à 12, **caractérisée en ce que** lesdits moyens d'allocation (MAR) sont agencés, en cas de détection d'un risque de congestion au niveau dudit réseau de transport, pour adresser à l'un au moins desdits compresseurs/décompresseurs (CDn) un indicateur binaire requérant le rejet de tout nouvel appel.

## Claims

1. Central station (SC) for a radio communication network also including at least two remote stations (SDi), said central station (SC) being connected to said remote stations (SDi) via a transport network and including at least two compressors/decompressors (CDn) configured to compress data sent in transmission channels chosen from said radio network and allocation means (MAR) configured to cyclically allocate to said remote stations (SDi) resources of said transport network corresponding to transmission capacities, **characterized in that** each compressor/decompressor (CDn) is configured to cyclically deliver first information items representing resources of the transport network required for the transmission channels for which it is responsible, and **in that** said allocation means (MAR) are configured to cyclically determine the distribution of the overall transmission capacity available in the transport network between the different compressors/decompressors (CDn), for the cycle in progress, based on said first information items, and to send to each compressor/decompressor (CDn), for its compression part, second information items representing the transmission capacity allocated to it for the next cycle based on this determined distribution.

2. Central station according to claim 1, **characterized in that** said allocation means (MAR) are configured to distribute the transmission resources available from the transport network between said compressors/decompressors (CDn) on a pro-rata basis of the resources required for the transmission channels for which they are respectively responsible and which are defined in the first information items that they deliver.

3. Central station according to one of claims 1 and 2, **characterized in that** said allocation means (MAR) are configured to allocate to said compressors/decompressors (CDn) either the resources they required for the transmission channels for which they are respectively responsible when the transmission resources available from the transport network are greater than or equal to the sum of the resources they required, or the resources which were allocated to them for the previous cycle, increased by the pro-rata of the difference between the sum of the transmission resources available from the transport network and the sum of the resources they required for the transmission channels for which they are respectively responsible.

4. Central station according to one of claims 1 to 3, **characterized in that** each compressor/decompressor (CDn) is configured to cyclically deliver first information items representing the number of calls set up and the speech rate.

5. Central station according to one of claims 1 to 3, **characterized in that** each compressor/decompressor (CDn) is configured to cyclically deliver first information items representing the variation in the number of calls set up and the variation in the speech rate compared to the previous cycle.

6. Central station according to one of claims 1 to 5, **characterized in that** said compressors/decompressors (CDn) and said allocation means (MAR) are configured to collaborate in the allocation of resources on an uplink, from the remote stations (SDi) to said central station (SC), and/or on a downlink, from the central station (SC) to said remote stations (SDi).

7. Central station according to one of claims 1 to 6, **characterized in that** each compressor/decompressor (CDn) is configured to cyclically deliver first information items representing resources of the transport network required for the transmission channels for which it is responsible, allowing for a margin.

8. Central station according to one of claims 1 to 6, **characterized in that** said allocation means (MAR) are configured to add a chosen margin to the resources of the transport network required for each compressor/decompressor (CDn) for the transmission channels for which it is responsible.

9. Central station according to one of claims 7 and 8, **characterized in that** said margin is constant.

10. Central station according to one of claims 7 and 8, **characterized in that** said margin is chosen equal to a chosen proportion of the resources of the transport network required for the transmission channels for which the compressor/decompressor (CDn) concerned is responsible.

11. Central station according to one of claims 1 to 10, **characterized in that** each compressor/decompressor (CDn) is configured to block data frames sent on newly active channels when the transmission capacity, required for the transmission channels from which it receives data for a given link, exceeds the transmission capacity which it has been assigned for the cycle in progress and for this given link.

12. Central station according to one of claims 1 to 11, **characterized in that** each compressor/decompressor (CDn) is configured to block data frames sent on newly active channels when the transmission capacity which it is authorized to use for the next cycle is less than or equal to the transmission capacity which it has been authorized to use for the cycle in progress.

13. Central station according to one of claims 1 to 12, **characterized in that** said allocation means (MAR) are configured, in the event of detection of a risk of congestion in said transport network, to address to at least one of said compressors/decompressors (CDn) a binary indicator requiring the rejection of any new call.

## Patentansprüche

1. Zentralstation (SC) für ein Funkkommunikationsnetzwerk, welches weiterhin mindestens zwei entfernte Stationen (SDi) umfasst, wobei die besagte Zentralstation (SC) über ein Transportnetz an die besagten entfernten Stationen (SDi) angeschlossen ist und mindestens zwei Komprimierer/Dekomprimierer (CDn), welche dazu ausgelegt sind, in ausgewählten Übertragungskanälen des besagten Funknetzwerks übertragene Daten zu komprimieren, sowie Zuweisungsmittel (MAR), welche dazu ausgelegt sind, den besagten entfernten Stationen (SDi) zyklisch Ressourcen des besagten Transportnetzes, welche den Übertragungskapazitäten entsprechen, zuzuweisen, umfasst, **dadurch gekennzeichnet, dass** jeder Komprimierer/Dekomprimierer (CDn) dazu ausgelegt ist, zyklisch erste Informationen, welche für die für die Übertragungskanäle, für die er zuständig ist, erforderlichen Ressourcen des Transportnetzes repräsentativ sind, zu liefern, und dass die besagten Zuweisungsmittel (MAR) dazu ausgelegt sind, zyklisch die Verteilung der gesamten Übertragungskapazität, welche im Bereich des Transportnetzes zwischen den verschiedenen Komprimierern/Dekomprimierern (CDn) für den momentanen Zyklus verfügbar ist, gemäß den besagten ersten Informationen zu bestimmen und an jeden Komprimierer/Dekomprimierer (CDn), für seinen Komprimierungsteil, zweite Informationen zu übertragen, welche für die Übertragungskapazität, die ihm gemäß dieser bestimmten Verteilung für den nächsten Zyklus zugewiesen wird, repräsentativ sind.

2. Zentralstation nach Anspruch 1, **dadurch gekennzeichnet, dass** die besagten Zuweisungsmittel (MAR) dazu ausgelegt sind, die verfügbaren Übertragungsressourcen des Transportnetzes zwischen den besagten Komprimierern/Dekomprimierern (CDn) proportional zu den für die Übertragungskanäle, für welche sie jeweils zuständig sind, erforderlichen und in den ersten von ihnen gelieferten Information definierten Ressourcen zu verteilen.

3. Zentralstation nach einem der Ansprüche 1 und 2, **dadurch gekennzeichnet, dass** die besagten Zuweisungsmittel (MAR) dazu ausgelegt sind, den besagten Komprimierer/Dekomprimierern (CDn) entweder die Ressourcen, die sie für die Übertragungskanäle, für welche sie jeweils zuständig sind, angefordert haben, wenn die verfügbaren Übertragungsressourcen des Transportnetzes höher als die oder gleich der Summe der von ihnen angeforderten Ressourcen sind, oder die Ressourcen, die ihnen für den vorausgegangenen Zyklus zugewiesen wurden, erhöht proportional zu der Differenz zwischen der Summe der verfügbaren Übertragungsressourcen des Transportnetzes und der Summe der Ressourcen, die sie für die Übertragungskanäle, für welche sie jeweils zuständig sind, angefordert haben, zuzuweisen.

4. Zentralstation nach einem der Ansprüche 1 bis 3, **dadurch gekennzeichnet, dass** jeder Komprimierer/Dekomprimierer (CDn) dazu ausgelegt ist, zyklisch erste Informationen, welche für die Anzahl von hergestellten Verbindungen und die Sprechrate repräsentativ sind, zu liefern.

5. Zentralstation nach einem der Ansprüche 1 bis 3, **dadurch gekennzeichnet, dass** jeder Komprimierer/Dekomprimierer (CDn) dazu ausgelegt ist, zyklisch erste Informationen, welche für die Schwankung der Anzahl von hergestellten Verbindungen und die Schwankung der Sprechrate gegenüber dem vorherigen Zyklus repräsentativ sind, zu liefern.

6. Zentralstation nach einem der Ansprüche 1 bis 5, **dadurch gekennzeichnet, dass** die besagten Komprimierer/Dekomprimierer (CDn) und die besagten Zuweisungsmittel (MAR) dazu ausgelegt sind, für die Zuweisung von Ressourcen in Aufwärtsrichtung, von den entfernten Stationen (SDi) zu der besagten Zentralstation (SC), und/oder in Abwärtsrichtung, von der Zentralstation (SC) zu den besagten entfernten Stationen (SDi), zusammenzuwirken.

7. Zentralstation nach einem der Ansprüche 1 bis 6, **dadurch gekennzeichnet, dass** jeder Komprimierer/Dekomprimierer (CDn) dazu ausgelegt ist, zyklisch erste Informationen, welche für die für die Übertragungskanäle, für welche er zuständig ist, erforderlichen Ressourcen des Transportnetzes repräsentativ sind, zu liefern, unter Berücksichtigung einer Reserve.

8. Zentralstation nach einem der Ansprüche 1 bis 6, **dadurch gekennzeichnet, dass** die besagten Zuweisungsmittel (MAR) dazu ausgelegt sind, den Ressourcen des Transportnetzes, welche von jedem Komprimierer/Dekomprimierer (CDn) für die Übertragungskanäle, für welche er zuständig ist, gefordert werden, eine ausgewählte Reserve hinzuzufügen.

9. Zentralstation nach einem der Ansprüche 7 und 8, **dadurch gekennzeichnet, dass** die besagte Reserve konstant ist.

10. Zentralstation nach einem der Ansprüche 7 und 8, **dadurch gekennzeichnet, dass** die besagte Reserve so gewählt wird, dass sie einem gewählten Verhältnis der Ressourcen des Transportnetzes, welche für die Übertragungskanäle, für welche der betroffene Komprimierer/Dekomprimierer (CDn) zuständig ist, erforderlich sind, entspricht.

11. Zentralstation nach einem der Ansprüche 1 bis 10, **dadurch gekennzeichnet, dass** jeder Komprimierer/Dekomprimierer (CDn) dazu ausgelegt ist, auf neu aktivierten Kanälen übertragene Datenrahmen zu sperren, wenn die für die Übertragungskanäle, von welchen er Daten für einen gegebenen Pfad empfängt, erforderliche Übertragungskapazität die Übertragungskapazität, welche ihm für den momentanen Zyklus und für diesen gegebenen Pfad zugewiesen wurde, überschreitet.

12. Zentralstation nach einem der Ansprüche 1 bis 11, **dadurch gekennzeichnet, dass** jeder Komprimierer/Dekomprimierer (CDn) dazu ausgelegt ist, auf neu aktivierten Kanälen übertragene Datenrahmen zu sperren, wenn die Übertragungskapazität, zu deren Benutzung er für den nächsten Zyklus berechtigt ist, niedriger als die oder gleich der Übertragungskapazität, zu deren Benutzung er für den momentanen Zyklus berechtigt wurde, ist.

13. Zentralstation nach einem der Ansprüche 1 bis 12, **dadurch gekennzeichnet, dass** die besagten Zuweisungsmittel (MAR) dazu ausgelegt sind, bei Erkennen eines Überlastrisikos im Bereich des besagten Transportnetzes mindestens einem der besagten Komprimierer/Dekomprimierer (CDn) einen binären Indikator, welcher das Verwerfen einer jeden neuen Verbindung anfordert, zu senden.
